# EUROPEAN PATENT SPECIFICATION

(11) **EP 4 299 882 B1**
(45) Date of publication and mention of the grant of the patent: **28.08.2024**
(21) Application number: 23173834.5
(22) Date of filing: 17.05.2023
(51) Int. Cl.: F01D 25/16, F16C 27/04, F02C 7/06

(54) **BEARING CARRIER SUPPORT WITH REDUCED AXIAL LENGTH**
LAGERTRÄGER MIT REDUZIERTER AXIALER LÄNGE
SUPPORT DE SUPPORT DE PALIER À LONGUEUR AXIALE RÉDUITE

(30) Priority: 14.06.2022 GB 202208667
(43) Date of publication of application: 03.01.2024
(73) Proprietor: Rolls-Royce plc, London N1 9FX (GB)
(72) Inventor: Town, Craig, Derby, DE24 8BJ (GB); Madge, Jason, Derby, DE24 8BJ (GB)
(74) Representative: Rolls-Royce plc

(56) References cited:
- CN-A- 101 504 039
- DE-A1- 102020 206 588
- US-A1- 2016 369 652
- US-A1- 2020 308 984
- US-B2- 7 857 519
- US-B2- 8 727 632

## Description

### Field of the invention

The present invention relates to a bearing carrier support, more specifically a bearing carrier support that provide a semi-flexible support to the rotor axial location (e.g. ball) bearing, used in conjunction with a squeeze film damper, for a rotary shaft of a gas turbine engine.

### Background

A bearing carrier support is a component designed to provide a semi-flexible support to the rotor axial location bearing, typically a ball bearing and used in conjunction with a squeeze film dampener, for a rotating shaft, e.g. of a gas turbine engine.

A bearing carrier support typically has a series of spring bars arrayed circumferentially in between a pair of flanges. The flanges locate the bearing in the housing/structure.

The radial stiffness of the bearing carrier support is generally such that it will support the rotor under normal operating conditions, but when the rotor exhibits vibration, due to out of balance or crossing a mode in the running range, the squeeze film dampener is activated and the energy is transferred in the squeeze film. The axial stiffness needs to be very high to react the thrust loads.

The bearing carrier support is typically arranged so that the axial loads are taken along the bars in tension and the radial loads taken perpendicular to the bars resulting in bending. The length and cross section of spring bars is driven by separate axial and radial stiffness requirements, which lend them to be long slender spring bars. The minimum achievable length is constrained by the need to achieve the desired radial stiffness whilst limiting bar bending stresses due to squeeze film dampener orbit.

These requirements result in relatively long bearing carriers, which increases engine centreline length. That is a significant driver of engine weight, which is undesirable in aerospace applications as weight increases specific fuel consumption (SPC). The components also tend to be expensive as they need to be machined into relatively long slender bars or precision assembled. This limits the opportunity for weight, cost and space envelope reduction much beyond what has already been achieved.

United States patent US 7857519 B2 discloses a compact squirrel-cage bearing support that has a plurality of beams interconnecting a first end portion to a second end portion. The length of the beams is greater than the axial spacing between the first end portion and the second end portion.

German patent application DE 202010206588 A1 discloses a bearing carrier for support of a rotary bearing of a rotating shaft of a gas turbine, e.g. flight gas turbine, having a flange portion with a supporting structure of the gas turbine, a bearing section, in which at least one rotary bearing is receivable, and with a cage portion in the axial direction of the bearing carrier between the flange portion and the bearing portion is arranged, and a plurality of circumferentially distributed strut. The flange portion and the bearing section are connected to one another.

United States patent US 8727632 B2 relates to a bearing support apparatus for a gas turbine engine, including: a first annular member; a second annular member disposed within the first annular member; first and second axially spaced-apart rolling-element bearings disposed between the first and second annular members so as to enable relative rotation of the first and second members; a first spring element mounting the first bearing to the first member; and a second spring element mounting the second bearing to the first member through the first spring element, such that the first and second bearings are physically supported in series relative to the first member.

United States patent application US2020/308984 A1 relates to a bearing assembly for a gas turbine engine including at least two bearings axially spaced from one another relative to a central axis, and a squirrel cage secured to a casing of the gas turbine engine. The squirrel cage supports respective bearing loads of the at least two bearings. The squirrel cage has a frangible section between the bearings configured to preferentially fail upon application of a load greater than a preselected threshold bearing load.

United States patent application US 2016/369652 A1 relates to a damping treatment applied to the ligaments of a squirrel cage type bearing support. The damping treatment reduces the vibrations transmitted to the engine casing as the engine passes through various resonance frequencies of the various parts of the gas turbine engine. A squeeze-film damper damps engine vibrations, but the oil in the squeeze-film damper can act as a stiffener during certain operational ranges, which increases the transmission of vibrations to the engine structure. Applying a damping treatment to the ligaments of the squirrel cage provides effective vibration damping.

Chinese patent application CN 101504039 A relates to a squirrel-cage cantilever elastic support. The support comprises a fixing ring, a plurality of elastic strips, a rolling bearing and a bearing support, wherein the plurality of the elastic strips on the same circumference are equationally fixed between the lateral surface of the fixing ring and the lateral surface of the bearing support; the bearing is arranged on the bearing support; and a bearing inner race is fixedly connected with a shaft to form the squirrel-cage cantilever elastic support. In the condition of permission and fitness of a mechanical structure, the squirrel-cage cantilever elastic support can inhibit bend and deformation of the shaft, reduce vibration of a machine, reduce the damage to the structure or parts, improve the operation stability, prolong the service life of the machine, reduce noise generated by vibration and the like. The squirrel-cage elastic support can be applied to various rotary machines There is however a need for an improved bearing carrier support or at least a bearing carrier support that provides a useful alternative to known bearing carrier supports.

### Summary

The invention relates to a bearing carrier support for connecting a rotary shaft of a gas turbine engine to a static portion of the gas turbine engine, the bearing carrier support comprising: a bearing portion for supporting the rotary shaft; a flange portion for attaching the bearing carrier support to the static portion of the gas turbine engine; and a support portion that connects the flange portion and the bearing portion, the support portion comprising a plurality of circumferentially distributed struts that are axially aligned with respect to the rotary shaft; wherein the number of struts is at least 500 and the diameter of each strut is no more than 3 mm, the struts are welded, bonded or trapped between the flange portion and the bearing portion.

In some embodiments the diameter of each strut is no more than 1.5 mm.

In some embodiments the diameter of each struct is no more than 0.5 mm.

In some embodiments the diameter of each strut is equal.

In some embodiments the number of struts is at least 1000.

In some embodiments the number of struts is at least 5000.

In some embodiments the struts have a constant diameter along their axial length.

In some embodiments the struts are non-continuously distributed such that there are gaps within the circumferential distribution.

In some embodiments the struts comprise steel, titanium, carbon fibre, or composite reinforced rods.

In some embodiments at least one snubber extends from the bearing portion to provide a hard stop against the flange portion.

In some embodiments at least one anti-rotational stop extends from the flange portion to provide a hard stop against a side face of the snubber.

In some embodiments the bearing carrier support is manufactured using Additive Layer Manufacturing.

In a second aspect there is provided a gas turbine engine that includes a bearing carrier support of the first aspect.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

### Brief description of the drawings

Embodiments will now be described by way of example only, with reference to the Figures, in which:
**Figure 1** is a sectional side view of a gas turbine engine, more particularly a geared turbofan aircraft engine;
**Figure 2** is a close-up sectional side view of an upstream portion of the gas turbine engine shown in Figure 1;
**Figure 3** is a partially cut-away view of a gearbox for the gas turbine engine show in Figures 1 and 2;
**Figure 4** is a side view of a first embodiment of the bearing carrier support of the present invention.
**Figure 5** is a sectional perspective view of the bearing carrier support of Figure 4.
**Figure 6** is a sectional perspective view of a second embodiment of the bearing carrier support of the present invention where the array of struts has intermediate gaps.
**Figure 7** is a sectional perspective view of a third embodiment of the bearing carrier support of the present invention where the arrays of struts comprises struts of varying diameter.
**Figure 8** is a close-up view of the part of the bearing carrier support in the elliptical region shown in Figure 7 from which the struts of varying diameter are more clearly seen.
**Figure 9** is a side view of a fourth embodiment of the bearing carrier support of the present invention that includes a circumferential snubber.
**Figure 10** is a sectional perspective view of a fifth embodiment of the bearing carrier support of the present invention that includes a plurality of snubbers.
**Figure 11** is a side view of the sixth embodiment of the bearing carrier support of the present invention that includes anti-rotational stops.

The following table lists the reference numerals used in the drawings with the features to which they refer:

| Ref no. | Feature | Figure |
|---|---|---|
| **A** | Core airflow | 1 |
| **B** | Bypass airflow | 1 |
| **9** | Principal and rotational axis (of engine) | 1, 2 |
| **10** | Gas turbine engine | 1 |
| **11** | Engine core | 1 |
| **12** | Air intake | 1 |
| **14** | Low pressure compressor | 1 |
| **15** | High pressure compressor | 1 |
| **16** | Combustion equipment | 1 |
| **17** | High pressure turbine | 1 |
| **18** | Bypass exhaust nozzle | 1 |
| **19** | Low pressure turbine | 1 |
| **20** | Core exhaust nozzle | 1 |
| **21** | Fan nacelle | 1 |
| **22** | Bypass duct | 1 |
| **23** | Fan | 1, 2 |
| **24** | Stationary supporting structure | 2 |
| **26** | Shaft | 1, 2, 4 |
| **27** | Shaft | 1, 4 |
| **28** | Sun gear | 2 |
| **30** | Epicyclic gearbox | 1, 2 |
| **32** | Planet gear | 2 |
| **34** | Planet carrier | 2 |
| **36** | Linkage | 2 |
| **38** | Ring gear | 2 |
| **40** | Linkage | 2 |
| **50** | Bearing carrier support | 4, 5, 6, 7, 8 |
| **60** | Bearing portion | 4, 5, 6, 7, 8 |
| **70** | Flange portion | 4, 5, 6, 7, 8 |
| **80** | support portion | 4, 5, 6, 7, 8 |
| **90** | Static portion | 4 |
| **100** | Array of struts | 4, 5, 6, 7, 8 |
| **110** | Individual strut | 4, 5, 6, 7, 8 |
| **120** | Snubber | 9, 10, 11 |
| **130** | Anti-rotational stop | 11 |

### Detailed description

Aspects and embodiments of the present invention will now be discussed with reference to the accompanying figures. Further aspects and embodiments will be apparent to those skilled in the art.

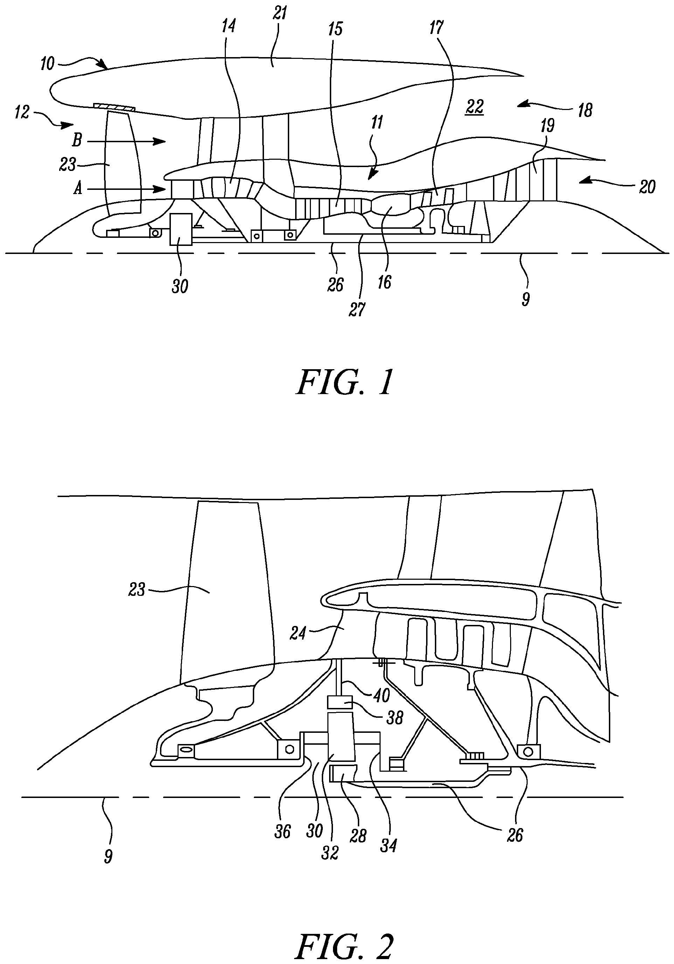

The present invention provides a bearing carrier support, for example, to provide a semi-flexible support to the rotor axial location (e.g. ball) bearing, used in conjunction with a squeeze film dampener, for a rotating shaft of a gas turbine engine. Figures 1, 2 and 3 describe a gas turbine engine for which the bearing carrier of the present invention is suitable for use, although the person skilled in the art would appreciate the bearing carrier support could be used to support the rotor axial location of a shaft of any gas turbine engine or indeed a shaft of any machine or apparatus.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

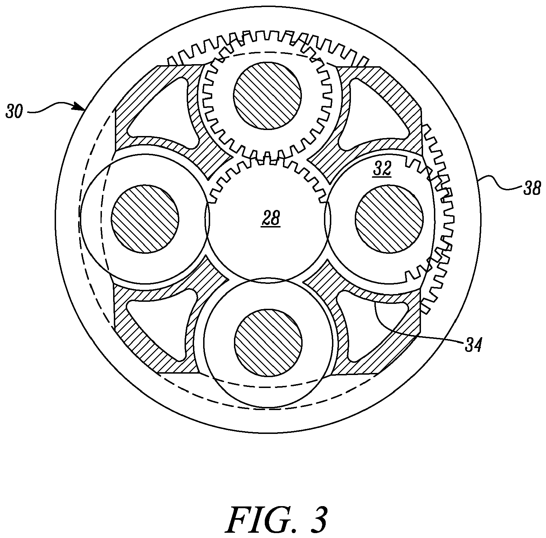

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

The present invention concerns a bearing carrier support that is, for example, to provide a semi-flexible support to the rotor axial location (e.g. ball) bearing, used in conjunction with or without a squeeze film dampener, for a rotating shaft of a gas turbine engine.

In broad terms the bearing carrier support 50 of the present invention comprises a bearing portion 60, a flange portion 70 and a support portion 80.

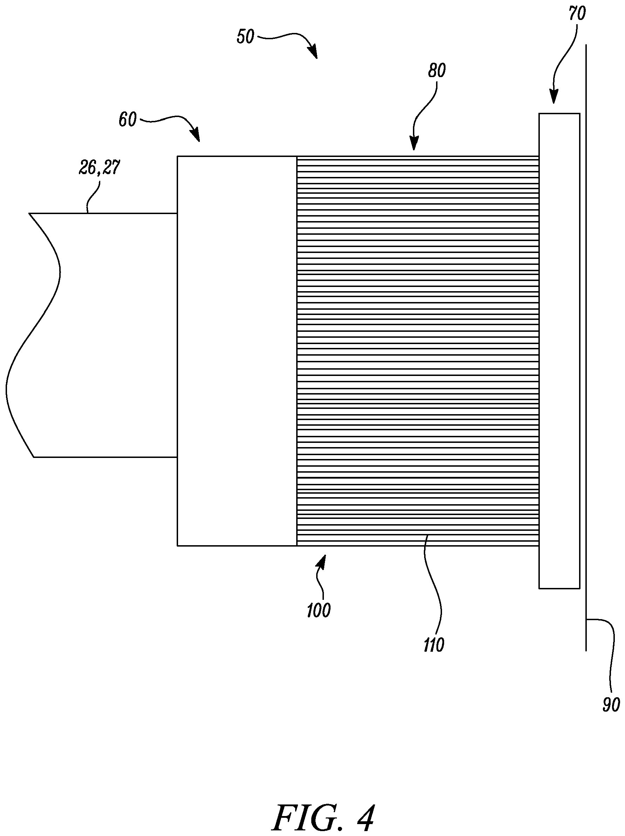

A first embodiment of such a bearing carrier support is shown in **Figure 4****.**

The bearing carrier support 50 interconnects the rotating shafts 26, 27 of a gas turbine engine with the static portion 90 of the gas turbine engine. Under normal engine operating conditions, the bearing carrier support 50 supports the shafts 26,27 in their axial position.

The bearing portion 60 is configured to receive a bearing (not shown) and the bearing locates the rotary shafts 26, 27. The bearing portion can be any suitable form for that purpose, for example, an annular section. The bearing portion 60 can be formed out of any suitable material for its purpose, for example metallic or composite. The bearing portion 60 is designed to house a bearing allowing the shaft 26,27 of the turbine engine to rotate.

The flange portion 70 attaches the bearing carrier support 50 to a static portion 90 of a gas turbine engine 10. The flange portion 70 can be any suitable form for that purpose, for example can be annular. The flange portion 70 can be formed from any suitable material for its purpose, for example metal or composite. The flange portion 70 may have a plurality of holes that correspond to holes within the gas turbine structure 90. The flange portion 70 can be removable fixed to the gas turbine structure with fixings, e.g. bolts. The flange portion 70 may be permanently fixed to the gas turbine structure, e.g. welded. The flange portion 70 is connected to the static portion 90 of the gas turbine engine 10 so that the shaft 26,27 is axially position.

The bearing (including the carrier support element) is typically located within a bearing housing which is located within or integral to a bearing support structure, or static structure. This transfers the bearing loads out to the casings and then airframe, via the engine mounts.

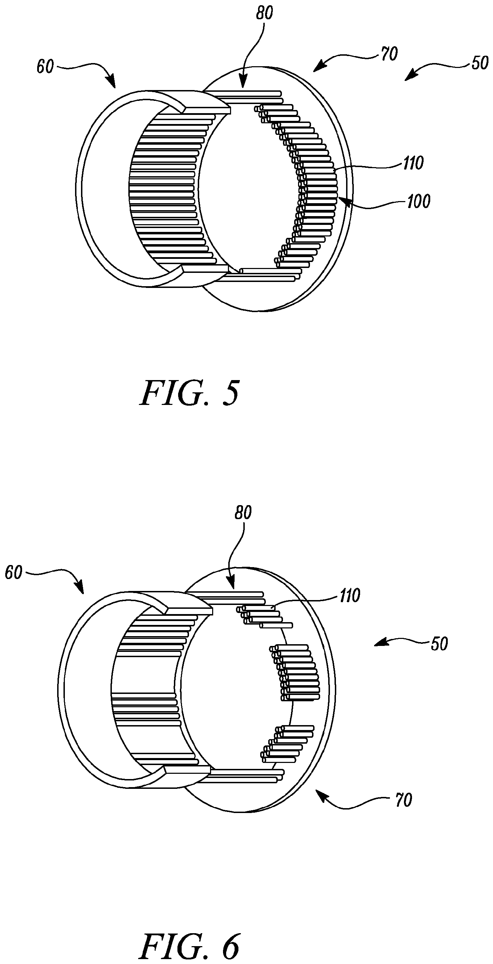

The support portion 80 connects the flange portion 70 and the bearing portion 60. The support portion 80 comprises a plurality of circumferentially distributed struts 100, shown in **Figure 5****,** that are axially aligned with respect to the rotary shaft 26,27. The struts 100 extend axially between the bearing portion 60 and the flange portion 70 and attach at their distal ends. Loads are typically absorbed through the squeeze film dampener and then absorbed.

The number of struts 100 is at least 500, for example from 500 to 1000 or from 500 and 5000. The struts 100 may be formed from any suitable material, for example metallic or composite. The struts 100 may not be the same material, for example an individual struts 110 in an array of struts 100 may be different materials.

The diameter of the individual strut 110 may be no more than 3 mm, for example from 1.5 mm to 3.0 mm or from 0.5 mm to 3.0 mm. The diameter of the individual strut 110 may or may not vary along its length. The individual strut 110 in an array of struts 100 may have the same or different diameters. In the example shown at Figure 4 and 5 the individual struts 110 have a constant diameter and are all equal.

The array of struts 100 may be distributed uniformly or non-uniformly.

In a second embodiment of the bearing carrier support 50 of the present invention the array of struts 100 is positioned in separate bundles, as shown in **Figure 6****.** The bundles may consist of the same or different numbers of individual struts 110. The bundles may be distributed uniformly of non-uniformly.

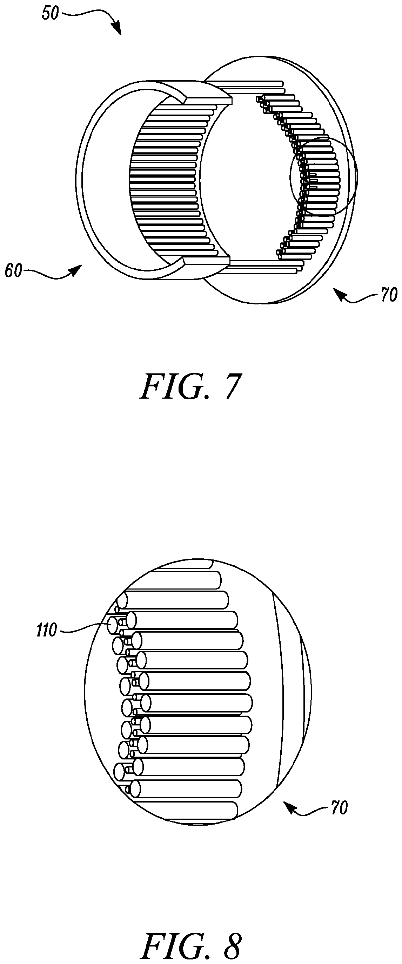

In a third embodiment of the bearing carrier support 50 of the present invention shown in **Figure 7** the individual struts 110 have different diameters. The variation in strut diameters is shown more clearly in **Figure 8****,** which is a close-up view of the elliptical area shown in Figure 7. In the third embodiment, the individual struts 110, while varying in diameter, are all circular in diameter. Alternatively, the individual struts 110 may have a cross section that is not circular, for example they may be square, oval or elliptical in cross-section. The individual struts 110 may be specifically designed to react the vibration modes of the rotating shaft 26,27. The individual struts 110 may be specifically designed to be stiffer in one direction over the other direction. The individual struts 110 may be specifically designed to reduce the overall size and improve the packaging within the design space.

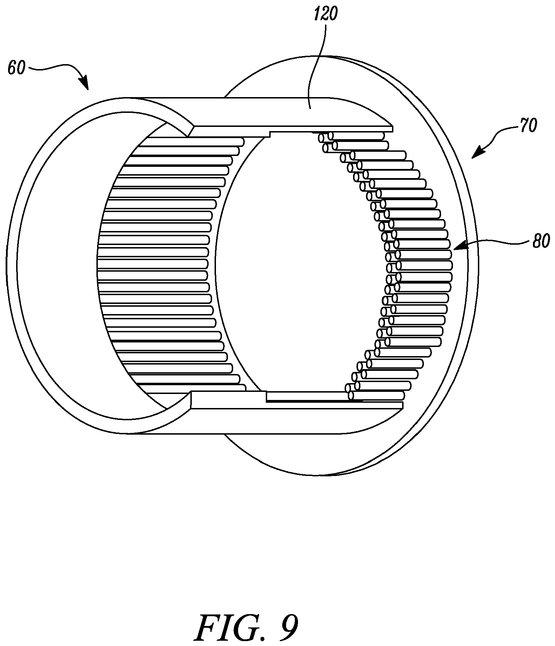

**Figure 9** shows a fourth embodiment of the bearing carrier support 50 of the present invention. This embodiment resembles the first embodiment except it has a snubber 120. In this embodiment there is a single snubber 120 in the form of a continuous ring that extends from the bearing portion 60 to form an abutment face that is engageable with the flange portion 70. The snubber 120 limits the deformation of the individual struts 110 by providing a hard stop between the bearing portion 60 and the flange portion 70 if an overload is encountered that may cause buckling of the individual struts 110, allowing the overload to bypass the array of struts 100. In alternative embodiments the snubber 120 may extend from the flange portion 70 to form an abutment face that is engageable with the bearing portion 60. The distance between the abutment face of the snubber 120 and the corresponding bearing portion 60 or flange portion 70 may be less than 1 mm. In the embodiment shown in figure 9 the snubber 120 is radially external to the array of struts 100. In other embodiments the snubber 120 may be radially internal to the array of struts 100. In other embodiments the snubber 120 may be interspersed within the array of struts 110.

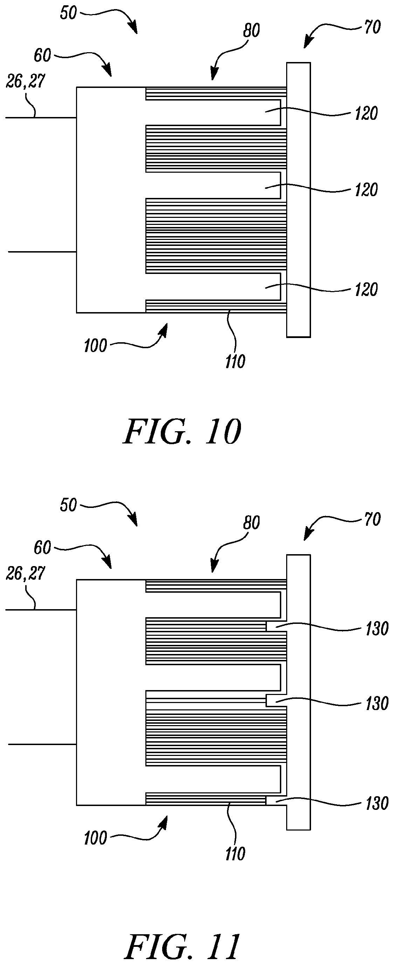

**Figure 10** shows a fifth embodiment of the bearing carrier support 50 of the present invention. In this embodiment a plurality of snubbers 120 extend from the bearing portion 60 to form an abutment face that is engageable with the flange portion 70. In alternative embodiments the plurality of snubbers 120 may extend from the flange portion 70 to form an abutment face that is engageable with the bearing portion 60. In the embodiment shown in Figure 10 the plurality of snubbers 120 is integral with the bearing portion 60 and is therefore formed of the same material. In another embodiment the plurality of snubbers 120 is not integral with the bearing portion 60 and so the plurality of 120 snubbers and the bearing portion 60 can be formed of different material, for example, the plurality of snubbers 120 may be formed of a hard rubber and the bearing portion 60 may be formed of a metal. The plurality of snubbers 120 may be positioned intermittently around the circumference of the flanges. The intermittent plurality of snubbers 120 may be equally spaced.

**Figure 11** shows a sixth embodiment of the bearing carrier support 50 of the present invention. In this embodiment anti-rotational stops 130 extend from the flange portion 70 to form an abutment face that is engageable with the side face of the snubbers 120. The anti-rotational stops 130 prevent a circumferential twisting of the array of struts 100 by providing a hard stop between the snubber 120 of the bearing portion 60 and the anti-rotational stop 130 of the flange portion 70 if an overload is encountered that may cause buckling of the array of struts 100, allowing the overload to bypass the array of struts 110. In alternative embodiments the anti-rotational stop 130 may extend from the bearing portion 60 to form an abutment face that is engageable with side face of the snubbers 120 that extend from the flange portion 70. The distance between the abutment face of the anti-rotational stop 130 and the side face of the corresponding snubber 120 may be less than 1 mm.

Bearing carrier supports 50 of the present invention may be fabricated using a conventional manufacturing process, an additive layer manufacturing (ALM) technique or a combination of these. The bearing carrier support 50 may be manufactured from any suitable material or combination of materials selected based on the specific application. The bearing portion 60, the flange portion 70 and the support portion 80 may be the same material of different material. The individual struts 110 are bonded, welded, co-cured (if composite) or trapped.

The bearing carrier support 50 allows for the resilient radial movement of the bearing (not shown) in response to the radial forces that are induced by the vibrations of the rotating shaft 26,27. The bearing carrier support 50 also provide a self-centring support for the shaft 26,27. The bearing carrier support 50 provides a support with high axial stiffness but low radial and torsional stiffnesses.

Depending on the dynamic properties required, the bearing carrier support 50 may comprise a combination of different arrays of struts 100. The size, number and spacing of the individual struts 110 may be selected on factors such as material properties, operating conditions and dynamic properties required for the bearing carrier support 50. Conventional numerical simulation and modelling techniques commonly used in the art may be used to determine a suitable design configuration of the bearing carrier support 50.

This provides a bearing carrier support 50 with a reduced weight and axial length when compared to existing designs. The aspect ratio and arrangement of the array of struts 100 makes them radially compliant, thus stresses can be kept low for a given orbit size and individual strut 110 length. Adequate radial and axial stiffness is achieved by increasing the total individual strut 110 count. This results in reduced component size (particularly axial length) and weight, whilst maintaining the current ability to achieve different axial and radial stiffness targets. The reduction in size allows the bearing carrier support 50 to be integrated into the bearing with an overall reduction in required axial length.

## Claims

1. A bearing carrier support (50) for connecting a rotary shaft of a gas turbine engine (10) to a static portion of the gas turbine engine, the bearing carrier support comprising:
a bearing portion (60) for supporting the rotary shaft;
a flange portion (70) for attaching the bearing carrier support to the static portion of the gas turbine engine; and
a support portion (80) that connects the flange portion and the bearing portion, the support portion comprising a plurality of circumferentially distributed struts (110) that are axially aligned with respect to the rotary shaft;
the bearing carrier support being **characterised in that** the number of struts (110) is at least 500 and the diameter of each strut is no more than 3 mm; and
the struts (110) are welded, bonded or trapped between the flange portion (70) and the bearing portion (60).

2. The bearing carrier support of claim 1, wherein the diameter of each strut (110) is no more than 1.5 mm.

3. The bearing carrier support of claim 1 or 2, wherein the diameter of each strut (110) is no more than 0.5 mm.

4. The bearing carrier support of any preceding claim, wherein the diameter of each strut (110) is equal.

5. The bearing carrier support of any preceding claim, wherein the number of struts (110) is at least 1000.

6. The bearing carrier support of any preceding claim, wherein the number of struts (110) is at least 5000.

7. The bearing carrier support of any preceding claim, wherein the struts (110) have a constant diameter along their axial length.

8. The bearing carrier support of any preceding claim, wherein the struts (110) are non-continuously distributed such that there are gaps within the circumferential distribution.

9. The bearing carrier support of any preceding claim, wherein the struts (110) comprise steel, titanium, carbon fibre, or composite reinforced rods.

10. The bearing carrier support of any preceding claim, wherein at least one snubber (120) extends from the bearing portion (60) to provide a hard stop against the flange portion (70).

11. The bearing carrier support of any preceding claim, wherein at least one anti-rotational stop (130) extends from the flange portion (70) to provide a hard stop against a side face of the snubber (120).

12. The bearing carrier support of any preceding claim, which is manufactured using Additive Layer Manufacturing.

13. A gas turbine engine (10) that includes a bearing carrier support (50) of any preceding claim.

## Patentansprüche

1. Lagerträgerstütze (50) zum Verbinden einer Drehwelle eines Gasturbinentriebwerks (10) mit einem statischen Abschnitt des Gasturbinentriebwerks, wobei die Lagerträgerstütze Folgendes umfasst:
einen Lagerabschnitt (60) zum Stützen der Drehwelle;
einen Flanschabschnitt (70) zum Befestigen der Lagerträgerstütze an dem statischen Abschnitt des Gasturbinentriebwerks; und
einen Stützabschnitt (80), der den Flanschabschnitt und den Lagerabschnitt verbindet, wobei der Stützabschnitt eine Vielzahl von in Umfangsrichtung verteilten Streben (110) umfasst, die in Bezug auf die Drehwelle axial ausgerichtet sind;
wobei die Lagerträgerstütze **dadurch gekennzeichnet ist, dass** die Anzahl der Streben (110) mindestens 500 beträgt und der Durchmesser jeder Strebe nicht mehr als 3 mm beträgt; und
die Streben (110) zwischen dem Flanschabschnitt (70) und dem Lagerabschnitt (60) verschweißt, verklebt oder eingeklemmt sind.

2. Lagerträgerstütze nach Anspruch 1, wobei der Durchmesser jeder Strebe (110) nicht mehr als 1,5 mm beträgt.

3. Lagerträgerstütze nach Anspruch 1 oder 2, wobei der Durchmesser jeder Strebe (110) nicht mehr als 0,5 mm beträgt.

4. Lagerträgerstütze nach einem vorhergehenden Anspruch, wobei der Durchmesser jeder Strebe (110) gleich ist.

5. Lagerträgerstütze nach einem vorhergehenden Anspruch, wobei die Anzahl der Streben (110) mindestens 1000 beträgt.

6. Lagerträgerstütze nach einem vorhergehenden Anspruch, wobei die Anzahl der Streben (110) mindestens 5000 beträgt.

7. Lagerträgerstütze nach einem vorhergehenden Anspruch, wobei die Streben (110) entlang ihrer axialen Länge einen konstanten Durchmesser aufweisen.

8. Lagerträgerstütze nach einem vorhergehenden Anspruch, wobei die Streben (110) diskontinuierlich verteilt sind, sodass innerhalb der Verteilung in Umfangsrichtung Lücken vorhanden sind.

9. Lagerträgerstütze nach einem vorhergehenden Anspruch, wobei die Streben (110) Stahl-, Titan-, Kohlefaser- oder mit Verbundwerkstoff verstärkte Stäbe umfassen.

10. Lagerträgerstütze nach einem vorhergehenden Anspruch, wobei sich mindestens ein Dämpfer (120) von dem Lagerabschnitt (60) aus erstreckt, um einen Festanschlag gegen den Flanschabschnitt (70) bereitzustellen.

11. Lagerträgerstütze nach einem vorhergehenden Anspruch, wobei sich mindestens ein Drehsicherungsanschlag (130) von dem Flanschabschnitt (70) aus erstreckt, um einen Festanschlag gegen eine Seitenfläche des Dämpfers (120) bereitzustellen.

12. Lagerträgerstütze nach einem vorhergehenden Anspruch, die unter Verwendung von additiver Schichtfertigung hergestellt wird.

13. Gasturbinentriebwerk (10), das eine Lagerträgerstütze (50) nach einem vorhergehenden Anspruch enthält.

## Revendications

1. Support de support de palier (50) pour raccorder un arbre rotatif d'un moteur à turbine à gaz (10) à une partie statique du moteur à turbine à gaz, le support de support de palier comprenant :
une partie de palier (60) pour supporter l'arbre rotatif ;
une partie de bride (70) pour fixer le support de support de palier à la partie statique du moteur à turbine à gaz ; et
une partie de support (80) qui raccorde la partie de bride et la partie de palier, la partie de support comprenant une pluralité d'entretoises réparties circonférentiellement (110) qui sont alignées axialement par rapport à l'arbre rotatif ;
le support de support de palier étant **caractérisé en ce que** le nombre d'entretoises (110) est d'au moins 500 et le diamètre de chaque entretoise n'est pas supérieur à 3 mm ; et
les entretoises (110) sont soudées, liées ou emprisonnées entre la partie de bride (70) et la partie de palier (60).

2. Support de support de palier selon la revendication 1, dans lequel le diamètre de chaque entretoise (110) n'est pas supérieur à 1,5 mm.

3. Support de support de palier selon la revendication 1 ou 2, dans lequel le diamètre de chaque entretoise (110) n'est pas supérieur à 0,5 mm.

4. Support de support de palier selon l'une quelconque des revendications précédentes, dans lequel le diamètre de chaque entretoise (110) est égal.

5. Support de support de palier selon l'une quelconque des revendications précédentes, dans lequel le nombre d'entretoises (110) est d'au moins 1000.

6. Support de support de palier selon l'une quelconque des revendications précédentes, dans lequel le nombre d'entretoises (110) est d'au moins 5000.

7. Support de support de palier selon l'une quelconque des revendications précédentes, dans lequel les entretoises (110) comportent un diamètre constant sur leur longueur axiale.

8. Support de support de palier selon l'une quelconque des revendications précédentes, dans lequel les entretoises (110) sont distribuées de manière non continue de telle sorte qu'il existe des espaces dans la distribution circonférentielle.

9. Support de support de palier selon l'une quelconque des revendications précédentes, dans lequel les entretoises (110) comprennent des tiges renforcées d'acier, titane, fibre de carbone ou composite.

10. Support de support de palier selon l'une quelconque des revendications précédentes, dans lequel au moins un système antibloquant (120) s'étend depuis la partie de palier (60) pour fournir une butée rigide contre la partie de bride (70).

11. Support de support de palier selon l'une quelconque des revendications précédentes, dans lequel au moins une butée anti-rotation (130) s'étend depuis la partie de bride (70) pour fournir une butée rigide contre une face latérale du système antibloquant (120).

12. Support de support de palier selon l'une quelconque des revendications précédentes, qui est fabriqué par fabrication additive.

13. Moteur à turbine à gaz (10) qui comprend un support de support de palier (50) selon l'une quelconque des revendications précédentes.
